# EUROPEAN PATENT SPECIFICATION

(11) **EP 1 160 142 B1**
(45) Date of publication and mention of the grant of the patent: **22.08.2007**
(21) Application number: 01500137.3
(22) Date of filing: 31.05.2001
(51) Int. Cl.: B60T 13/24, B60T 13/44, B60T 17/02

(54) **Servo brake system**
Servobremssystem
Système de freinage assisté

(30) Priority: 02.06.2000 ES 200001411
(43) Date of publication of application: 05.12.2001
(73) Proprietor: Analisis y Simulacion, S.L., 01510 Minano - Alava (ES)
(72) Inventor: Saracho Rotaeche, Luis, 01006 Vitoria (ES)
(74) Representative: Davila Baz, Angel

(56) References cited:
- DE-A- 2 815 112
- DE-A- 3 405 965
- US-A- 4 211 312

## Description

### OBJECT OF THE INVENTION

As indicated by the title itself, the present invention is related with improvements introduced in the design of a motor vehicle servo brake system, with the object of reducing its size and consequently its weight and cost without it suffering any impairment with regard to its performance.

In order to achieve this goal use is made of a source of pressure higher than atmospheric as producer of the source of assistance for the pressure chamber, said pressure being introduced by means of a duct the initial intake of which is connected either from the lining or head of the cylinder or from any point of the exhaust manifold, passing through a conditioner and a regulator on the intermediate path.

### BACKGROUND OF THE INVENTION

The limitations with respect to the pressure present in the system of obtaining the assisting force are the reasons for the present size of servo brakes. The size is inversely proportional to the pressure since the force is the product of the product times the area of actuation thereof.

In the current art, the majority of motor vehicle servo brakes comprise a reservoir with two chambers separated by a diaphragm or piston in relation on one of the sides with the brake pump and one on the other with the brake pedal. On the inside of said reservoir an equivalent pressure is established in both chambers such that while idle, the diaphragm or piston is at rest in the centre and during the actuation of the servo brake it is displaced due to the pressure difference that is established between the chambers. By granting inflow and outflow to an amount of pressure in one or other chamber, it is managed to have the established pressure difference act on the diaphragm or piston and produce the force. Normally the high pressure source is usually atmospheric whilst the low pressure chamber is obtained in the intake duct by the Bernoulli effect.

By means of the system proposed this method of operating the servo brake is not altered, the sole difference consisting in taking the pressure in the high pressure chamber from a source different to atmospheric. By augmenting the pressure it is possible to make a proportional reduction in the surface area to which it is applied with the consequent diminution in the size of the chamber without reducing its performance as far as the force obtained is concerned.

The German document DE 34 05 965 A describes a system that generates pneumatic pressure for automobile vehicles characterized in that an engine cylinder makes the functions of a compressor. The engine's cylinder output channel is closed by an element that is opened when there are enough pressure in an accumulator, and is closed when there are not enough pressure in the accumulator. There also are a cylinder between the accumulator and the engine's output channel capable to generate a force bigger than the force present in the engine's cylinder output channel.

The system described before is similar to the object of the present invention in the fact that takes an auxiliary pneumatic force from the engine's cylinder. Despite of that, the system described in DE 34 05 965 A, presents the following deficiencies:
Firstly, the accumulator do not take directly the pressure from the engine's cylinder. It takes the pressure through a cylinder of separation that gives to the accumulator a bigger pressure than the pressure related in the engine's cylinder output channel. At the same time, the document describes that the brake system also cut the fuel injection to the engine. This solution is not only complex under a mechanical point of view, it is also dangerous since the fuel injection depends on elements of the brake system. The failure of any element, specially the closing element or the pressure meter, could cause not only a brake's failure but a engine's failure. In the present invention the fuel injection is independent of the servo brake.

Secondly, the system described in DE 34 05 965 A do not comment any kind of filter of the air impurities. This can cause a failure of the servo brake.

With the object of facilitating as much as possible the constitution of a new design for a servo brake effectively remedying the deficiency presented by other servo brakes employed, placing special emphasis on their shape and size, the new design has been developed for a servo brake, object of the present invention.

### DESCRIPTION OF THE INVENTION.

The benefit of the invention is related with the magnitude of the working pressure obtained in the reservoir with two pressure chambers. Because the braking system requires neither a continuous nor exhaustive use of the brake and given the low of fluid necessary for its optimal operation, the reduction of surface area due to the increase of pressure on the inside of one of the chambers does not affect the actuation of the servo brake. With the aim of achieving said desired increase in pressure, a tap-off applied directly to the lining of the cylinder is implemented and by means of a small duct the pressure there obtained is transmitted to the servo brake. Additionally and as treatment of the gases contained in the cylinder, the duct traverses a filter and a cooling coil where the gases are treated for the purpose of reducing their temperature and removing the maximum quantity of impurities. Also a regulator is to be fitted to the duct, said regulator including a non-return valve which permits the transmission of gases in the compression stroke, said valve being closed during the remaining strokes.

In a second practical embodiment, the gas tap-off which furnishes a pressure greater than atmospheric is made from the engine exhaust system. A small duct is led from any point of the exhaust manifold and after an adequate treatment of the exhaust gases in order to reduce their temperature and impurities, it is connected to the high pressure chamber of the servo brake. In like manner to the previous case, a regulator is installed at the start of the duct, said regulator opening and closing the gas passage.

The pressure tap-off could be situated also in the cylinder head. For example, in petrol engines it can be implemented through a washer mounted on the spark plug itself. In diesel engines, the arrangement would be similar, but making use of the preheating spark plugs. In this case the orifice could be on the inside of the spark plug itself or else independently thereof. This solution facilitates cleaning and maintenance.

In the pressure conditioner system it is possible to insert a small accumulator which works at the maximum pressure of the combustion chamber.

From all the foregoing, the following benefits are the outcome of the improvements introduced in the servo brake system, without altering the existing operating system, said benefits centring on the reduction in size and consequently in weight and cost, without impairment of performance.

For the purpose of facilitating the explanation, some sheets of drawings are attached in which a pair of practical cases of embodiment are shown within the scope of the present invention.

### BRIEF DESCRIPTION OF THE DRAWINGS.

Figure 1 shows a block diagram that illustrates a servo brake and the pressure chamber feed system in accordance with a first practical embodiment of the invention which implements the tap-off from the lining of the cylinder.

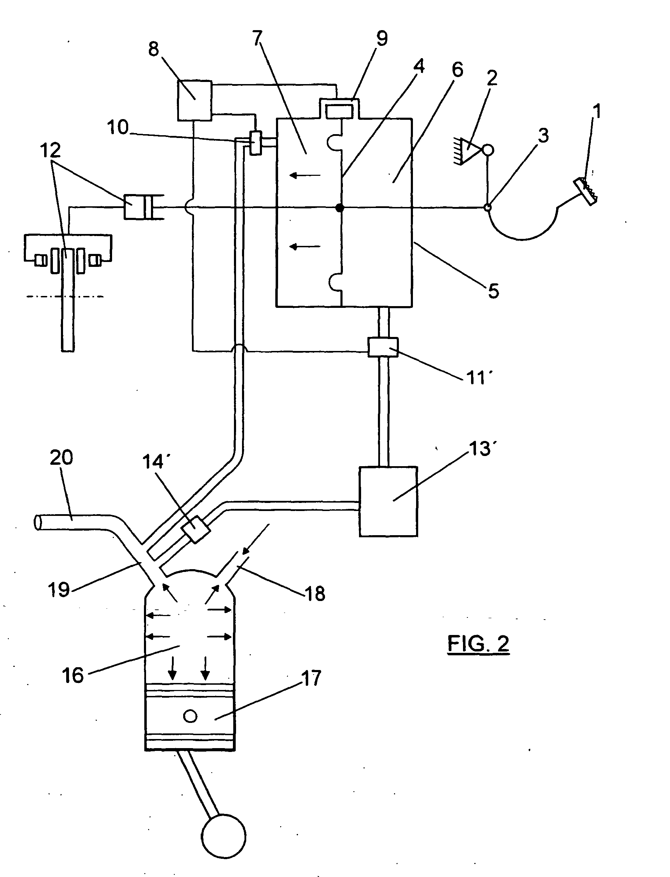

Figure 2 shows a block diagram that illustrates a servo brake and the pressure chamber feed system in accordance with a second practical embodiment of the invention which implements the tap-off from the exhaust manifold.
Figure 3 shows a view in perspective of a third embodiment in which the tap-off of gas under pressure is implemented in the head.
Figure 4 shows a plan view of figure 3.
Figure 5 shows a cross section on the line V-V of figure 4.
Figure 6 shows a variant of figure 5.
Figure 7 shows a schematic similar to that of figure 1 which a pressurised accumulator has been included in the system.

### DESCRIPTION OF THE PREFERRED EMBODIMENT.

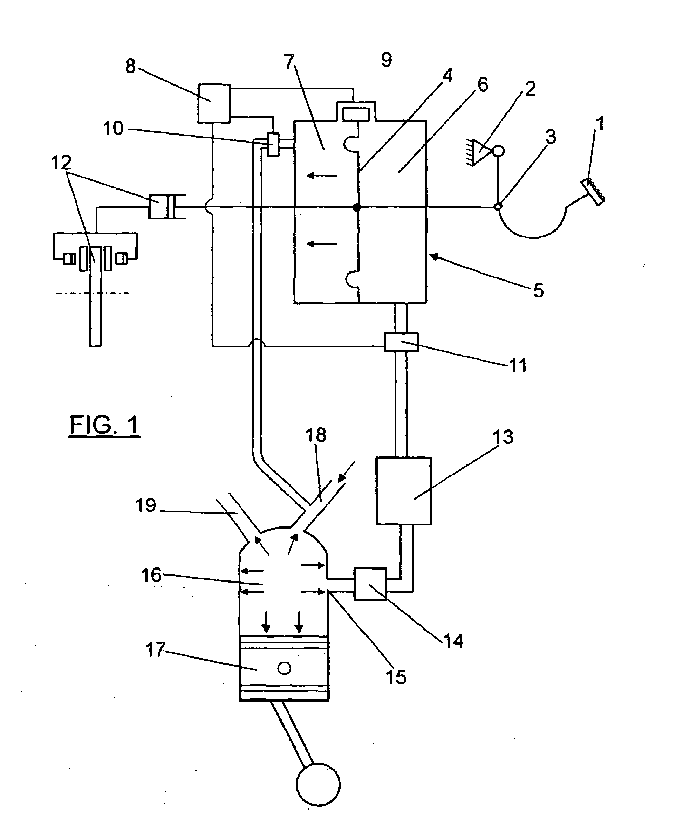

As can be seen from figure 1, there are two clearly differentiated parts. On one hand there is the servo brake itself comprising a pedal (1) with a point of support (2) and axis of rotation (3) which acts directly on an intermediate partition or diaphragm (4) which can be displaced in one direction or another inside a reservoir (5) in which two chambers (6) and (7) are formed. The communication circuit (9) established between the chambers (6) and (7) is kept open by a regulator (8), such that while the servo brake is idle, the same pressure is maintained in both chambers (6) and (7). Also, said regulator (8) likewise governs the inlet (11) and outlet (10) ducts corresponding to the high pressure chamber (6) and the low pressure chamber (7). Movement of the intermediate partition or diaphragm (4) is transferred directly to the brake circuit (12) bringing about the operation thereof.

According to a first practical embodiment, in the clearly differentiated second part of the invention, the high pressure chamber (6) is connected to an inlet duct (11) which, as well as being governed by the regulator (8), passes through a conditioner (13) on the inside of which is housed a cooling coil and a filter, and a small pressure regulator (14) which incorporates on its inside a control and non-return valve, before being joined via a small orifice (15), of diameter 2 mm maximum, to the lining of the cylinder (16). When the piston (17) is in the upstroke and the intake (18) and exhaust (19) ducts are closed by their relatives valves, a proportional part of the pressure reached on the inside of the cylinder (16) is transferred through the small orifice (15) in the lining of the cylinder (16) traversing the pressure regulator (14) and the conditioner (13) and reaching the high pressure chamber (6) through the inlet duct (11). At the same time as the extra pressure is introduced on the inside of the reservoir (5) the regulator (8) closes the communication circuit (9) established between the chambers (6) and (7). The pressure difference which arises on the inside of the reservoir facilitates the motion of the intermediate diaphragm (4) and the actuation of the brake circuit (12). Once the actuation has concluded, the regulator (8) re-opens the communication circuit (9) balancing the pressures in the high pressure chamber (6) and in the low pressure chamber (7), this being accompanied with the displacement of the intermediate diaphragm (4) to the idle position. The gases escape from the low pressure chamber (7) through the outlet duct (10), discharging again into the exhaust duct (18) and from there they are transferred to the exhaust pipe (20).

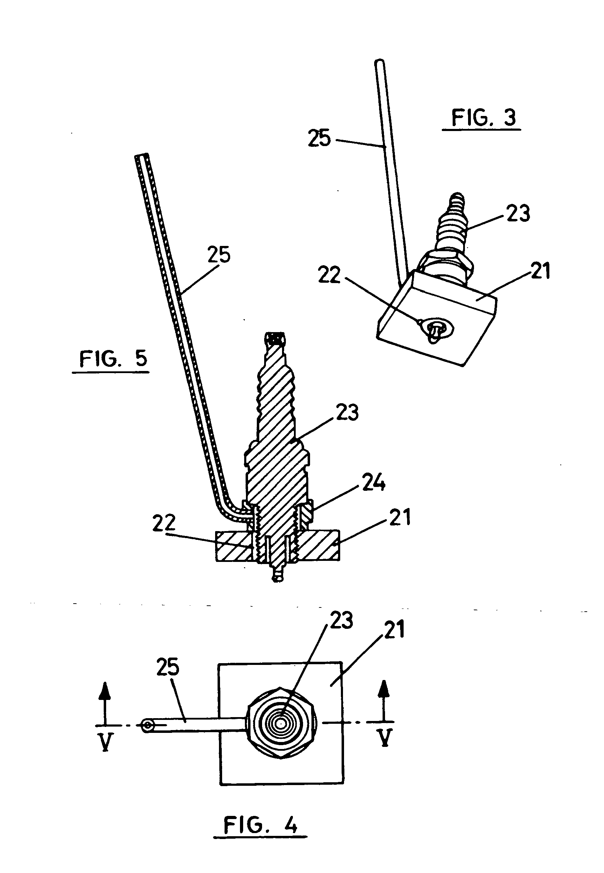

As can be appreciated from figures 3,4, and 5, the tap-off of gas under pressure could be carried out in the head (21) of the cylinder through an orifice (22), close to the threaded orifice of the spark plug (23), the washer (24) and the pipe (25), the rest of the servo brake being the same as in the previous cases.

The orifice (22) could be secant to the threaded orifice of the spark plug and even, as is shown in figure 5, the orifice (22') could pass through the spark plug itself.

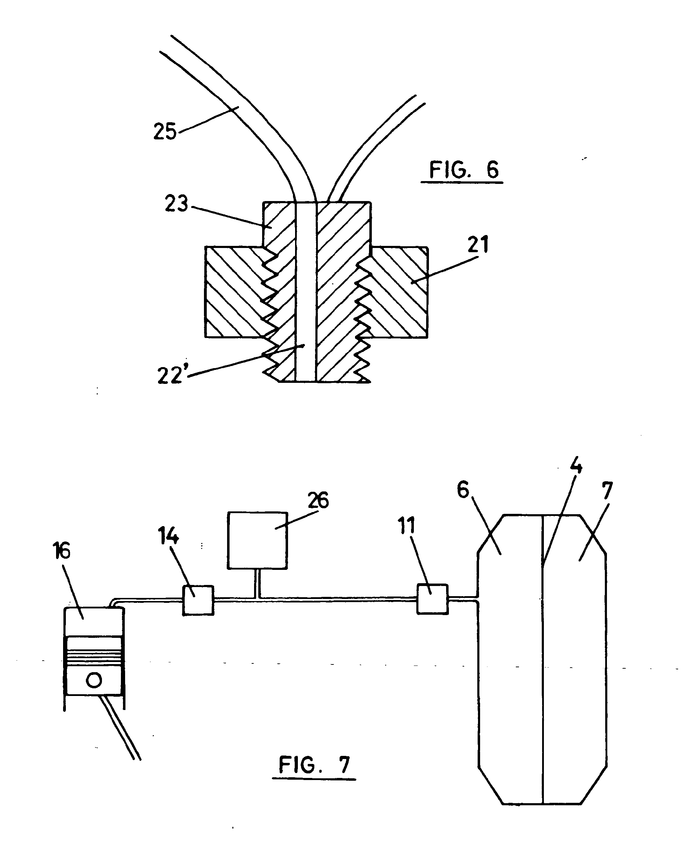

Finally figure 7 shows the disposition of an accumulator (26) at maximum combustion pressure in the servo brake system.

## Claims

1. Servo brake system, which comprises a brake pedal (1) and a reservoir (5) subdivided internally, by means of a displaceable intermediate diaphragm (4), into two independent chambers, one of high pressure (6) and the other of low pressure (7), the diaphragm (4) of which receives the thrust of the brake pedal (1) and acts on the brake circuit (12) and the chambers (6,7) of which are intercommunicated via a circuit (9) controlled by a regulator (8) which, in turn, opens and closes an inlet duct (11) to the high pressure chamber (6) and an outlet duct (10) of the low pressure chamber (7), for creating a pressure difference between the two which is transmitted to the brake circuit (12) via the aforementioned diaphragm (4), where the inlet duct (11) of the high pressure chamber (6) is connected to a point of the engine combustion circuit where a pressure higher than atmospheric prevails, whilst the outlet duct (10) of the low pressure chamber (7) opens into a point of the engine circuit where a pressure equal or close to atmospheric prevails, **characterised in that** the inlet duct (11) is connected to the high pressure chamber (6) through a less than 2 mm diameter orifice (15) to the engine combustion chamber (16); the inlet duct (11) passes through a conditioner (13) which incorporates a filter and a cooling coil, and a pressure regulator (14) which incorporates a non-return valve and a control valve; the outlet duct (10) of the low pressure chamber (7) is connected to the combustion gas exhaust manifold (19), at different points, between which there exists a pressure difference, and terminates in the intake duct (18) of the engine.

2. Servo brake system in accordance with claim 1, **characterised in that** the tap-off gas under pressure is carried out through an orifice (22) implemented in the cylinder head.

3. Servo brake system in accordance with claim 2, **characterised in that** the orifice (22) is implemented close to the threaded orifice of the spark plug (23)

4. Servo brake system in accordance with claim 2, **characterised in that** the orifice (22) is a secant to the threaded orifice of the spark plug (23).

5. Servo brake system in accordance with claims 3 or 4, **characterised in that** the orifice (22) terminates on the inside of a washer (24) from which a tube (25) runs.

6. Servo brake system in accordance with claim 2, **characterised in that** the orifice (22') passes through the spark plug (23).

7. Servo brake system in accordance with claims 1 and 2, **characterised in that** in the pressure conditioner system a small accumulator (26) is mounted which works at the maximum pressure of the combustion chamber (16).

## Patentansprüche

1. Servobremssystem, umfassend ein Bremspedal (1) und einen Behälter (5), der innen durch eine verschiebbare Zwischenmembran (4) in zwei unabhängige Kammern unterteilt ist, eine mit hohem Druck (6) und eine andere mit niedrigem Druck (7), wobei seine Membran (4) die Schubkraft des Bremspedals (1) empfängt und auf den Bremskreis (12) wirkt und seine Kammern (6, 7) über einen Kreislauf (9) miteinander in Verbindung stehen, der von einem Regler (8) gesteuert wird, der seinerseits einen Einlasskanal (11) zur Hochdruckkammer (6) und einen Auslasskanal (10) der Niederdruckkammer (7) öffnet und schließt, um zwischen beiden eine Druckdifferenz zu erzeugen, die über die vorgenannte Membran (4) zum Bremskreis (12) übertragen wird, wobei der Einlasskanal (11) der Hochdruckkammer (6) mit einem Punkt des Verbrennungskreislaufs der Maschine verbunden ist, wo ein Druck größer als der atmosphärische Druck vorherrscht, während der Auslasskanal (10) der Niederdruckkammer (7) in einen Punkt des Verbrennungskreislaufs der Maschine mündet, wo ein Druck gleich dem oder nahe am atmosphärischen vorherrscht, **dadurch gekennzeichnet, dass** der Einlasskanal (11) durch eine Öffnung (15) im Maschinenbrennraum (16) mit weniger als 2 mm Durchmesser mit der Hochdruckkammer (6) verbunden ist; der Einlasskanal (11) einen Konditionierer (13) durchquert, der ein Filter und ein Kühlöl umfasst, und einen Druckregler (14), der ein Rückschlagventil und ein Regelventil umfasst; der Auslasskanal (10) der Niederdruckkammer (7) an verschiedenen Punkten, zwischen denen eine Druckdifferenz besteht, mit dem Verbrennungsabgaskrümmer (19) verbunden ist und im Einlasskanal (18) der Brennkraftmaschine endet.

2. Servobremssystem nach Anspruch 1, **dadurch gekennzeichnet, dass** das unter Druck stehende Gas durch eine Öffnung (22) abgezapft wird, die im Zylinderkopf hergestellt ist.

3. Servobremssystem nach Anspruch 2, **dadurch gekennzeichnet, dass** die Öffnung (22) nahe an der Gewindeöffnung der Zündkerze (23) hergestellt ist.

4. Servobremssystem nach Anspruch 2, **dadurch gekennzeichnet, dass** die Öffnung (22) eine Sekante der Gewindeöffnung der Zündkerze (23) ist.

5. Servobremssystem nach Anspruch 3 oder 4, **dadurch gekennzeichnet, dass** die Öffnung (22) an der Innenseite einer Scheibe (24) endet, von welcher aus ein Rohr (25) verläuft.

6. Servobremssystem nach Anspruch 2, **dadurch gekennzeichnet, dass** die Öffnung (22') die Zündkerze (23) durchquert.

7. Servobremssystem nach Anspruch 1 und 2, **dadurch gekennzeichnet, dass** im Druckkonditionierungssystem ein kleiner Speicher (26) angeordnet ist, der beim Höchstdruck des Brennraums (16) betrieben wird.

## Revendications

1. Système de freinage assisté, qui comprend une pédale de frein (1) et un réservoir (5) subdivisé en interne, à l'aide d'un diaphragme intermédiaire mobile (4), en deux chambres indépendantes, l'une ayant une pression élevée (6) et l'autre ayant une pression faible (7), le diaphragme (4) recevant la poussée de la pédale de frein (1) et agissant sur le circuit de freinage (12) et les chambres (6, 7) communiquant via un circuit (9) contrôlé par un régulateur (8) qui, à son tour, ouvre et ferme un conduit d'admission (11) vers la chambre à pression élevée (6) et un conduit d'échappement (10) de la chambre à pression faible (7), afin de créer une différence de pression entre les deux, qui est transmise au circuit de freinage (12) via le diaphragme susmentionné (4), dans lequel le conduit d'admission (11) de la chambre à pression élevée (6) est relié à un point du circuit de combustion du moteur auquel une pression supérieure à la pression atmosphérique prévaut, tandis que le conduit d'échappement (10) de la chambre à pression faible (7) s'ouvre au niveau d'un point du circuit du moteur auquel une pression égale ou proche de la pression atmosphérique prévaut, **caractérisé en ce que** le conduit d'admission (11) est relié à la chambre à pression élevée (6) par le biais d'un orifice de moins de 2 mm de diamètre (15) vers la chambre de combustion du moteur (16) ; le conduit d'admission (11) passe à travers un conditionneur (13) qui comprend un filtre et une bobine de refroidissement, et un régulateur de pression (14) qui comprend une soupape de non-retour et une soupape de commande ; le conduit d'échappement (10) de la chambre à pression faible (7) est relié au collecteur d'échappement de gaz de combustion (19), en des points différents, entre lesquels il existe une différence de pression, et se termine dans le conduit d'admission (18) du moteur.

2. Système de freinage assisté selon la revendication 1, **caractérisé en ce que** le gaz collecté sous pression est acheminé par le biais d'un orifice (22) mis en oeuvre dans la culasse.

3. Système de freinage assisté selon la revendication 2, **caractérisé en ce que** l'orifice (22) est mis en oeuvre près de l'orifice fileté de la bougie d'allumage (23).

4. Système de freinage assisté selon la revendication 2, **caractérisé en ce que** l'orifice (22) est une sécante par rapport à l'orifice fileté de la bougie d'allumage (23).

5. Système de freinage assisté selon la revendication 3 ou 4, **caractérisé en ce que** l'orifice (22) se termine à l'intérieur d'une rondelle (24) de laquelle part un tube (25).

6. Système de freinage assisté selon la revendication 2, **caractérisé en ce que** l'orifice (22') passe à travers la bougie d'allumage (23).

7. Système de freinage assisté selon les revendications 1 et 2, **caractérisé en ce que**, dans le système de conditionneur de pression, un accumulateur de petite taille (26) est monté et fonctionne à la pression maximale de la chambre de combustion (16).
